# EUROPÄISCHE PATENTSCHRIFT

(11) **EP 0 964 183 B1**
(45) Veröffentlichungstag und Bekanntmachung des Hinweises auf die Patenterteilung: **18.02.2004**
(21) Anmeldenummer: 99810504.3
(22) Anmeldetag: 08.06.1999
(51) Int. Cl.: F16G 1/00, B65H 18/22

(54) **Riemen zur Herstellung eines Wattewickels**
Belt for producing a cotton wool roll
Courroie pour la production d'un rouleau d' ouate

(30) Priorität: 12.06.1998 CH 127698
(43) Veröffentlichungstag der Anmeldung: 15.12.1999
(73) Patentinhaber: MASCHINENFABRIK RIETER AG, 8406 Winterthur (CH)
(72) Erfinder: Spörri, Christian, 8457 Humlikon (CH); Sigrist, Thomas, 8400 Winterthur (CH)

(56) Entgegenhaltungen:
- EP-A- 0 240 861
- DE-A- 4 217 808
- DE-A- 19 639 402
- DE-B- 1 073 385
- FR-A- 2 079 125
- US-A- 3 683 712
- US-A- 5 536 554
- PATENT ABSTRACTS OF JAPAN vol. 1998, no. - , 30. April 1998 (1998-04-30) & JP 10 002381 A (BANDO CHEM IND LTD), 6. Januar 1998 (1998-01-06)

## Beschreibung

Die Erfindung bezieht sich auf einen Endlosriemen für eine Wickelvorrichtung zur Erzeugung eines Wattewickels, bei der die Watte auf einen von einem umlaufenden, endlosen Riemen angetriebenen, insbesondere hülsenartigen Kern aufgewickelt wird, welchem während dem Aufwickelvorgang beidseitig und koaxial jeweils eine, den Kern in radialer Richtung überragende Wickelscheibe zuzuordnen ist, wobei der Riemen in einer Längsebene eingebettete Faserstränge aufweist

In der Veröffentlichung der DE-A1-19 539 365 ist eine derartige Wickelvorrichtung zur Herstellung eines Wattewickels beschrieben und gezeigt, wobei der Wattewickel unter Verwendung eines Flachriemens gebildet wird. Dabei ist um eine Hülse, die auf einer stationären Achse drehbar gelagert ist, eine Schlaufe des Riemens gelegt, die sich mit grösser werdendem Wickeldurchmesser in ihrer Grösse anpasst und den Wattewickel am Ende des Wickelvorganges fast vollständig umschlingt. Zur Bildung des Wattewikkels wird eine Wattebahn zwischen zwei Umlenkrollen in die Riemenschlaufe eingeführt und an die Hülsenoberfläche übergeben. Als Riemen wird in dieser Veröffentlichung ein aus Kevlar endlos gewickelter Riemen vorgeschlagen. Wie z. B. aus der FR-A-2 079 125 zu entnehmen werden derartige Flachriemen im wesentlichen mit in Längsrichtung des Riemens ausgerichteten und eingebetteten Zugschnüren versehen. Diese in Längsrichtung ausgerichteten Zugschnüre tragen jedoch nichts zur Quersteifigkeit des Riemens bei, welche für die Herstellung eines homogenen Wattewickels von Vorteil ist.

Zur Führung der Seitenränder der Wattebahn beim Aufwickelvorgang ist jeweils koaxial zur Hülse eine Wickelscheibe angeordnet, welche die Seitenränder der Wattebahn beim Aufwickeln abstützt und zur Bildung von sauberen Stirnflächen des fertigen Wattewickels beiträgt.

Der zwischen den Wickelscheiben geführte Riemen weist einen Abstand zu den inneren Stirnflächen dieser Wickelscheiben auf. Um das Einklemmen von Fasern aus dem Randbereich der Wattebahn im Spalt zwischen den Riemenrändern und der Wickelscheibe zu verhindern, wurde in einer früheren, unter der EP-A1-878568 nach veröffentlichten Anmeldung der Anmelderin vorgeschlagen, die seitliche Verschiebung des Riemens während des Wickelvorganges einzuschränken. Dabei wurde vorgeschlagen, dass den Riemen auf der Seite, welche den Oberflächen der Umlenkrollen zugeneigt ist, mit einer Profilierung (Zahnsegment) zu versehen, welche in Längsrichtung des Riemens verläuft. Diese Profilierung greift dann in ein entsprechendes Gegenprofil der Umlenkrollen ein und verhindert somit eine seitliche Verschiebung des Riemens.

Mit dieser Massnahme wurde erreicht, dass weniger Fasern aus den Randbereichen der Wattebahn herausgezogen wurden, wodurch auch die Verschmutzung des Riemens insbesondere im Randbereich herabgesetzt wurde.

Es hat sich jedoch gezeigt, dass diese Massnahme zwar eine Verbesserung erbrachte, jedoch noch nicht befriedigend war. Da die Riemen bei der Herstellung aus einer grossflächigen Bahn herausgeschnitten werden, entstehen dabei relativ rauhe Seitenränder des Riemens. Diese rauhen Seitenränder neigen zum Herauslösen von einzelnen Fasern aus den relativ losen Randbereichen der Wattebahn. Das wiederum führt zur Verschmutzungen und teilweise zur Beeinträchtigung des Wickelvorganges.

Sofern die Riemen noch mit eingebetteten Zugmitteln in Form von Fasersträngen (z.B. Kord, Kevlar usw.) versehen sind, wird dieser Effekt noch verstärkt. Diese Zugmittel sind in der Regel unter einem spitzen Winkel zur Längsrichtung des Riemens ausgerichtet, wodurch beim Schneidevorgang des Riemens jeweils ein Ende des Zugmittels im Bereich der Seitenränder des Riemens endet. Das heisst, teilweise stehen die Faserenden dieser Zugmittel im Bereich der Schnittkante des Riemens nach aussen ab und bilden somit zusätzlich ein Hinderniss, das das Herauslösen von Fasern aus den Randbereichen der Wattebahn begünstigt. Ähnlich verhält es sich auch, wenn anstelle von nebeneinanderliegenden Schnüren ein Gewebe zur Anwendung kommt.

Ausgehend von den geschilderten Nachteilen des Standes der Technik stellt sich die Erfindung die Aufgabe den Riemen für eine Wickelvorrichtung derart auszubilden, so dass ein Anhaften von Fasern im Randbereich des Riemens annähernd ausgeschlossen werden kann.

Diese Aufgabe wird dadurch gelöst, dass der Riemen winklig zur Längsrichtung des Riemens verlaufende Faserstränge aufweist, welche in einen Abstand zu den Seitenrändern des Riemens enden.

Es wird weiter vorgeschlagen, dass die Faserstränge aus nebeneinander liegenden Schnüren (18) gebildet sind, welche in einem spitzen Winkel (α) zur Längsrichtung des Riemens (5) verlaufen. Damit ist gewährleistet, dass keine der Fasern dieser Faserstränge über die Seitenränder des Riemens hinausragen können.

Bei Verwendung eines Gewebes wird ebenfalls vorgeschlagen, dass das Gewebe einen Abstand zu den Seitenrändern des Riemens aufweist, um das Hinausragen von Fasern über den Seitenrand zu vermeiden.

Vorzugsweise wird vorgeschlagen, die Oberfläche des Riemens, auf welcher der Wattewickel gebildet wird, mit einer faserhaftfreien Beschichtung zu versehen.

Diese Beschichtung kann derart angeordnet sein, so dass sie vorteilhafterweise auch über die beiden Längsseiten des Riemens geführt ist.

Des weiteren wird vorgeschlagen, dass die Seitenränder des Riemens mit einer Verschalung versehen sind. Durch diese Alternative kann ein spezielles Verfahren zur Anbringung der Faserstränge mit Abstand zum Riemenrand umgangen werden. Das heisst, der Riemen kann in herkömmlicher Weise geschnitten werden und zur Erzielung eines faserhaftfreien Seitenrandes die Verschalung nachträglich angebracht werden. Dabei ist es denkbar, dass die Verschalung aus einem längs des Riemens verlaufenden Abdeckelement gebildet ist, das wenigstens teilweise in eine Ausnehmung der Seitenränder hineinragt. Dieses Abdeckelement kann entweder aufgeklebt oder aufvulkanisiert werden.

Um das Anhaften in den Randbereichen des Riemens noch weiter zu unterbinden, wird vorgeschlagen, dass die Seitenränder des Riemens geschliffen werden, wodurch eine Rauhtiefe von weniger als zwei Mikrometer (µm) vorteilhaft ist.

Um seitliche Schwankungen des Riemens während des Wickelvorganges zu vermeiden, wird vorgeschlagen, dass der Riemen mit einer in Längsrichtung verlaufenden profilierten Oberfläche versehen ist, welche den Oberflächen der Umlenkrollen gegenüber steht.

Weiter Vorteile sind anhand nachfolgender Ausführungsbeispiele näher aufgezeigt und beschrieben.
Es zeigen:
- Fig. 1: eine schematische Schnittdarstellung einer Wickelvorrichtung im Bereich der Wickelscheiben,
- Fig. 2: eine vergrösserte Schnittdarstellung des Riemenquerschnittes entsprechend Fig. 1 in erfindungsgemäss vorgeschlagener Ausbildung,
- Fig. 3: eine Draufsicht nach Fig. 2,
- Fig. 4: ein weiteres Ausführungsbeispiel entsprechend der Darstellung nach Fig. 2,
- Fig. 5: eine Draufsicht nach Fig. 4,
- Fig. 6: ein weiteres Ausführungsbeispiel gemäss Fig. 2,
- Fig. 7: eine Draufsicht nach Fig. 6 und
- Fig. 8: eine Teilansicht der Draufsicht eines Riemens mit der erfindungsgemäss angeordneten Anbringung eines eingebetteten Gewebes.

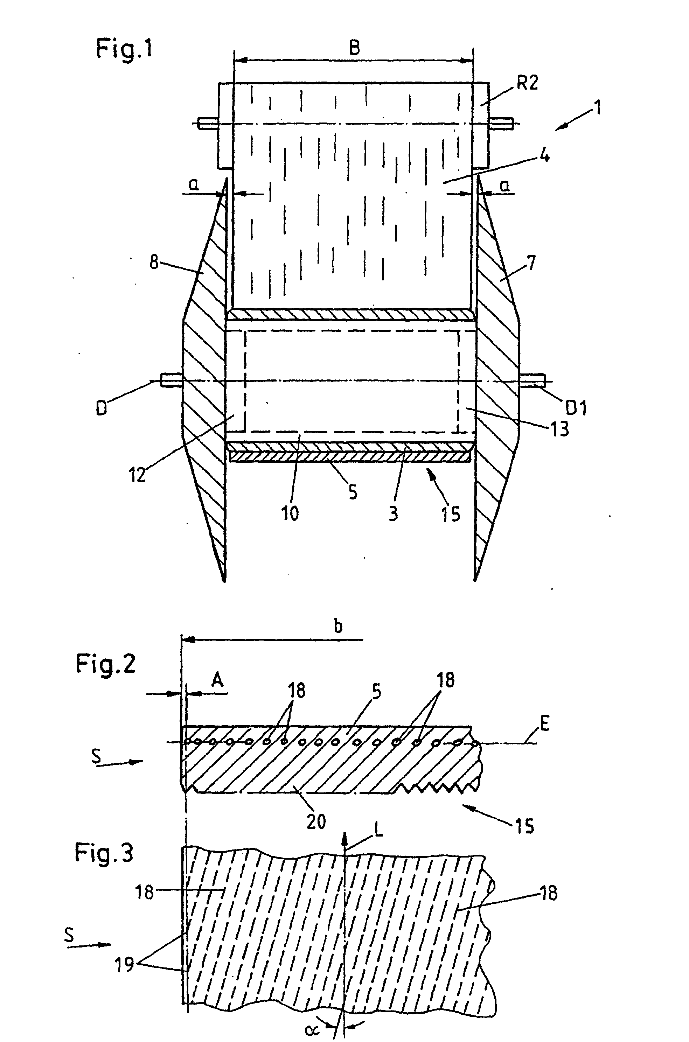

Fig. 1 zeigt einen Ausschnitt einer Wickelvorrichtung 1, einer Wickeleinrichtung zur Herstellung eines Wattewickels mittels eines umlaufenden Flachriemens 5 im Bereich der Hülsenklemmung. Die Ansicht der Fig. 1 ist mit der Fig. 3 vergleichbar, welche in der veröffentlichten DE-A1-195 39 365 gezeigt ist. In dieser Offenlegungsschrift ist auch eine komplette Ansicht eines Beispiels einer derartigen Wickelvorrichtung gezeigt und näher beschrieben. Es wird deshalb auf eine nähere Beschreibung der Wickeleinrichtung in dieser Anmeldung verzichtet und auf das Ausführungsbeispiel der DE-A1-195 39 365 verwiesen.

In Fig. 1 ist eine der beiden Umlenkrollen R2 gezeigt, von welchen aus sich eine Riemenschlaufe zur Wickelbildung nach unten erstreckt. Auf dem über die Rolle R2 nach unten umgeleiteten Riemen 5 wird eine schematisch angedeutete Wattebahn 4 in den Umfangsbereich einer Hülse 10 überführt. Die Hülse 10 ist an ihrem Aussenumfang mit nicht näher gezeigten Öffnungen versehen, welche mit dem Innenraum der Hülse verbunden sind, an welchen beim Anwickelvorgang ein Unterdruck angelegt (nicht gezeigt) wird. Die Hülse 10 ist über die Ansätze 12 und 13 in stationär gelagerten und horizontal verschiebbare Wickelscheiben 7 und 8 geklemmt. Die Wickelscheiben 7, 8 sind über die Achsen D, D1 drehbar gelagert. Wie ebenso aus Fig. 1 ersichtlich, wurde bereits eine Wattebahn 4 zur Bildung eines Wattewickels 3 auf die Hülse 10 aufgewickelt. Der Riemen 5 kann z.B. mit einem Zahnprofil 15 versehen sein, welches z.B. in Fig. 2 angedeutet ist. Dieses Zahnprofil 15 greift in ein entsprechendes Profil der Umlenkrolle R2 ein, so dass die seitliche Führung des Riemens 5 in bezug auf die Wickelwalzen 7, 8 gewährleistet ist. Das heisst, der vorgesehene Abstand a von den Seitenrändern S des Riemens 5 zu den Stirnseiten der Wickelscheiben 7, 8 bleibt während des Wickelvorganges konstant. Lediglich die Breite B der Wattebahn 4 vergrössert sich durch die aufgebrachte Anpresskraft über den Riemen 5, so dass die äusseren Kanten der Wattebahn 4 etwa zur Anlage an die inneren Stirnflächen der Wickelscheiben 7, 8 kommen.

Um einen sauberen Wickel 3, insbesondere im Bereich seiner Stirnflächen zu bilden, ist es notwendig, die Abstände a möglichst klein zu halten. Um Störungen beim Wickelvorgang zu vermeiden, ist es deshalb notwendig, die Seitenränder S des Riemens 5 so auszubilden, so dass keine Fasern in diesem Bereich anhaften können. Damit wird auch verhindert, dass einzelne Fasern aus den Randbereichen der Wattebahn 4 durch Mitnahme über den Randbereich S herausgelöst werden. Derartige Massnahmen, um den Randbereich S des Riemens 5 faserhaftfrei auszugestalten, sind in den nachfolgenden Ausführungsbeispielen der Fig. 2 bis Fig. 8 gezeigt und beschrieben.

Wie aus den Fig. 2 und 3 zu entnehmen, ist der Riemen 5 (nur Teilansicht gezeigt) in einer Längsebene E mit Zugmitteln in Form von nebeneinanderliegenden Schnüren 18 z.B. aus Kord versehen. Diese Schnüre 18 werden bei der Herstellung des Riemens 5 endlos in den Trägerstoff 20 (z.B. Polyamid) eingebettet. Der gewünschte Riemen 5 mit einer Breite b wird dann aus einer breiten Riemenfläche herausgeschnitten. Dabei werden auch die Schnüre 18 durchgeschnitten, welche unter einem Winkel α in Längsrichtung L des Riemens ausgerichtet sind. Die Enden 19 der Schnüre 18 würden dann ebenfalls auf der Höhe des Seitenrandes S liegen, sofern keine Vorkehrungen getroffen werden, wie dies in Fig. 2 und 3 gezeigt ist. Hierbei wurde der Riemen so ausgeführt, so dass die Enden 19 der Schnüre 18 in einem Abstand A vom jeweiligen Seitenrand S des Riemens 5 enden. Dadurch wird gewährleistet, dass keine Fasern der Enden 19 über den jeweiligen Seitenrand S hinausragen können. Dieser Abstand A könnte z.B. auch durch nachträgliches Aufvulkanisieren eines Zusatzteils im Bereich der Seitenränder S erzielt werden. Um das Anhaften von Fasern in diesem Randbereich S noch weiter herabzusetzen, ist es möglich, diesen Randbereich S zu schleifen, um eine möglichst geringe Rauhtiefe dieser Oberfläche zu erzielen.

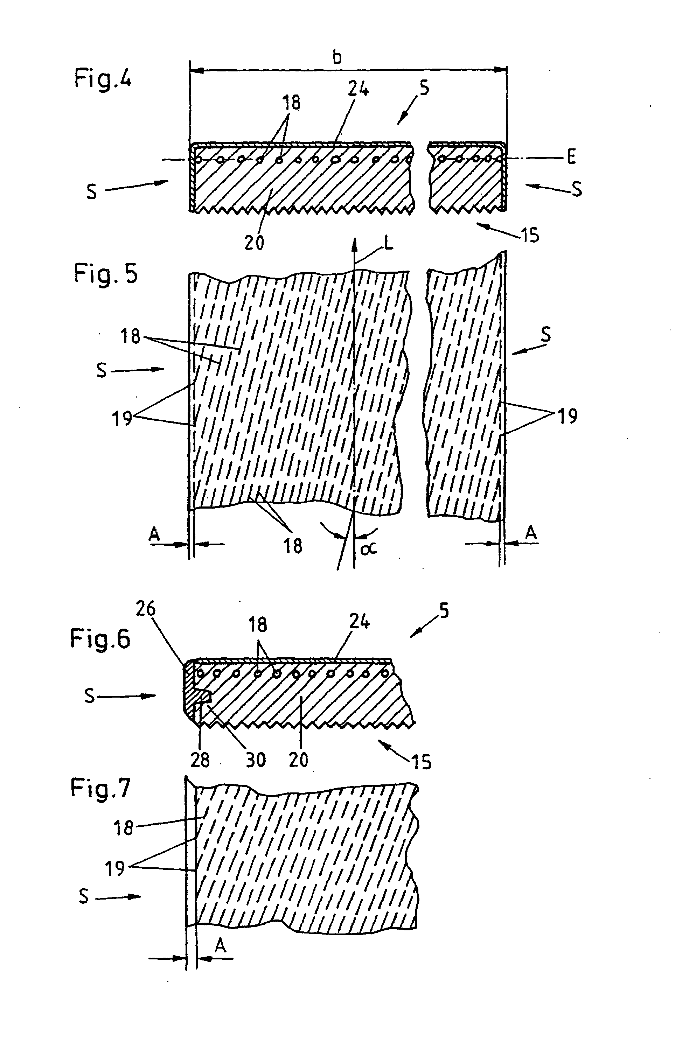

In Fig. 4 und 5 wird ein weiteres Ausführungsbeispiel eines Riemens 5 gezeigt, wobei auf der wickelbildenden Seite des Riemens 5 eine Schicht 24 auf den Riemen 5 aufgebracht wurde. Diese Schicht ist mit einer sehr geringen Rauhtiefe versehen und kann aufgeklebt oder aufvulkanisiert werden. Die Schicht 24 ist auch über die Seitenränder S des Riemens 5 gezogen, so dass sich die Enden 19 der Schnüre 18 ebenfalls in einem Abstand A zum Seitenrand S befinden. Auf der Oberfläche des Riemens 5, welche der beschichteten Oberfläche gegenüber steht, ist wie bereits beschrieben, ein Zahnprofil 15 zur seitlichen Führung vorgesehen.

Im Ausführungsbeispiel nach Fig. 6 und 7 ist ebenfalls eine faserabweisende Schicht 24 auf der einen Oberfläche des Riemens 5 angebracht. Um die Enden 19 der Schnüre 18 im Bereich der Seitenränder S abzudecken, ist auf den jeweiligen Seitenrand S ein Abdeckelement 26 aufgebracht. Dieses Abdeckelement 26 erstreckt sich im wesentlichen über die gesamte Höhe des Riemens 5 und ist mit einem Ansatz 28 versehen, der in eine Ausnehmung 30 des Trägerstoffes hineinragt. Das Abdeckelement 26 kann aufgeklebt oder in einer sonstigen Weise mit dem Trägerstoff 20 befestigt werden. Auch hier wird gewährleistet, dass sich die Enden 19 der Schnüre 18 in einem Abstand A zum Seitenrand S befinden. Es ist auch denkbar, dass zusätzlich durch Schleifen die Oberfläche des Abdeckelementes 26 mit einer geringen Rauhtiefe auszubilden.

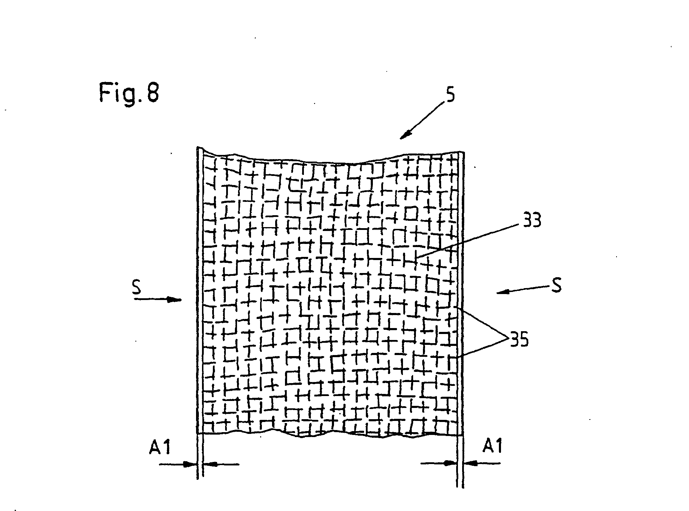

In Fig. 8 wird ein weiteres Ausführungsbeispiel einer möglichen Ausführung eines Riemens 5 gezeigt, wo anstelle der einzelnen und nebeneinanderliegenden Schnüre 18 ein Gewebe 33 zur Anwendung kommt. Auch hier kann mit den in Fig. 2 bis Fig. 7 gezeigten Massnahmen erreicht werden, dass sich die Enden 35 des Gewebes 33 in einem Abstand A1 von den Seitenrändem S befinden.

Mit den vorgeschlagenen Ausführungsbeispielen in bezug auf die Ausführung des Riemens ist es möglich, eine Wickelvorrichtung mit einem umlaufenden Riemen vorzusehen, wobei einerseits hohe Aufwickelgeschwindigkeiten erzielt und andererseits Störungen durch Verschmutzungen insbesondere im Randbereich des Riemens vermieden werden können.

## Patentansprüche

1. Endlosriemen für eine Wickelvorrichtung (1) zur Erzeugung eines Wattewickels (3), bei der die Watte (4) auf einen von einem umlaufenden, endlosen Riemen (5) angetriebenen, insbesondere hülsenartigen Kern (10) aufgewickelt wird, welchem während dem Aufwickelvorgang beidseitig und koaxial jeweils eine, den Kern in radialer Richtung überragende Wickelscheibe (7,8) zuzuordnen ist, wobei der Riemen (5) in einer Längsebene (E) eingebettete Faserstränge aufweist, **dadurch gekennzeichnet dass** der Riemen winklig zur Längsrichtung des Riemens (5) verlaufende Faserstränge aufweist, welche in einen Abstand (A, A1) zu den Seitenrändern (S) des Riemens (5) enden.

2. Riemen nach Anspruch 1, **dadurch gekennzeichnet, dass** die Faserstränge aus nebeneinander liegenden Schnüren (18) gebildet sind, welche in einem spitzen Winkel (α) zur Längsrichtung des Riemens (5) verlaufen.

3. Riemen nach Anspruch 1, **dadurch gekennzeichnet, dass** der Riemen (5) wenigstens in einer Längsebene (E) mit eingebetteten Fasersträngen (18) in Form eines Gewebe (33) versehen ist, welches einen Abstand (A1) zu den Seitenrändern (S) des Riemens (5) aufweist.

4. Riemen nach einem der Ansprüche 1 bis 3, **dadurch gekennzeichnet, dass** der Riemen (S) auf der Oberfläche,auf welcher der Wattewickel (3) gebildet wird,mit einer faserhaftfreien Beschichtung (24) versehen ist.

5. Riemen nach Anspruch 4, **dadurch gekennzeichnet, dass** auch die beiden Längsseiten (S) des Riemens (5) mit der faserhaftfreien Beschichtung (24) überdeckt ist.

6. Riemen nach Anspruch 4, **dadurch gekennzeichnet, dass** die Seitenränder (S) des Riemens (5) mit einer Verschalung (26) versehen sind.

7. Riemen nach Anspruch 6, **dadurch gekennzeichnet, dass** die Verschalung aus einem längs des Riemens verlaufenden Abdeckelement (26) gebildet ist, das wenigstens teilweise in eine Ausnehmung (30) der Seitenränder (S) hineinragt.

8. Riemen nach einem der Ansprüche 1 bis 7, **dadurch gekennzeichnet, dass** die Seitenränder (S) des Riemens (5) geschliffen sind und eine Rauhtiefe von weniger als 2,0 µm aufweisen.

9. Riemen nach einem der Ansprüche 1 bis 8, **dadurch gekennzeichnet, dass** der Riemen (5) auf der Seite, welche der Oberfläche gegenüberliegt auf welcher der Wattewickel gebildet wird, mit einer profilierten Oberfläche (15) versehen ist.

## Claims

1. An endless belt for a winding device (1) for producing a lap roll (3), in which the lap (4) is wound onto a core (10), in particular in the shape of an empty bobbin, which is driven by an endless circulating belt (5), to which, during the winding process, there is allocated on both sides and co-axially in each case a winding disk (7,8) which projects over the core in a radial direction, whereby the belt (5) exhibits fibre strands embedded in a longitudinal plane (E), **characterised in that** the belt exhibits fibre strands running at an angle to the longitudinal direction of the belt (5), which end at a distance interval (A, A1) from the side edges (S) of the belt (5).

2. The belt according to Claim 1, **characterised in that** the fibre strands are formed from cords (18) lying next to one another, which run at an acute angle (α) to the longitudinal direction of the belt (5).

3. The belt according to Claim 1, **characterised in that** the belt (5) is provided with embedded fibre strands (18) in the form of a fabric (33) at least in one longitudinal plane (E), said fabric exhibiting a distance interval (A1) to the side edges (S) of the belt (5).

4. The belt according to one of Claims 1 to 3, **characterised in that** the belt (5) is provided with a coating (24) which is free of fibre adherence on the surface on which the lap roll (3) is formed.

5. The belt according to Claim 4, **characterised in that** the two longitudinal sides (S) of the belt (5) are also covered with the coating (24) which is free of fibre adherence.

6. The belt according to Claim 4, **characterised in that** the side edges (S) of the belt (5) are provided with a sheathing (26).

7. The belt according to Claim 6, **characterised in that** the sheathing is formed from a cover element (26) running along the length of the belt, said element projecting at least partially into a cut-out (30) of the side edges (S).

8. The belt according to one of Claims 1 to 7, **characterised in that** the side edges (S) of the belt (5) are ground, and exhibit a rough depth of less than 2.0 µm.

9. The belt according to one of Claims 1 to 8, **characterised in that** the belt (5) is provided with a profiled surface (15) on the side which is located opposite the surface on which the lap roll is formed.

## Revendications

1. Courroie sans fin pour un dispositif à rouleaux (1) servant à produire un rouleau de nappe (3), dans lequel la nappe (4) est enroulé sur un mandrin (10), particulièrement du genre fuseau, entraîné par une courroie sans fin en rotation (5), mandrin auquel, pendant le processus d'enroulement, une joue de rouleau de nappe particulière (7,8) est à adjoindre de chaque côté et d'une manière coaxiale, laquelle dépasse le mandrin dans le sens radial, et où la courroie (5) possède des écheveaux de fils enrobés dans un plan longitudinal (E),
**caractérisée par le fait que**
la courroie possède des écheveaux de fils orientés d'une manière angulaire par rapport au sens longitudinal de la courroie (5), lesquels se terminent à une distance (A, A1) par rapport aux bords latéraux (S) de la courroie (5).

2. Courroie selon revendication 1,
**caractérisée par le fait que**
les écheveaux de fils sont formés par des ficelles (18) reposant les unes à côté des autres, lesquelles sont orientées avec un angle aigu (α) par rapport au sens longitudinal de la courroie (5).

3. Courroie selon revendication 1,
**caractérisée par le fait que,**
au moins dans un plan longitudinal (E), la courroie (5) est pourvue d'écheveaux de fils enrobés (18), sous forme d'un tissu (33), lequel possède une distance (A1) par rapport aux bords latéraux (S) de la courroie (5).

4. Courroie selon l'une des revendications 1 à 3,
**caractérisée par le fait que**
la surface de la courroie (5), sur laquelle le rouleau de nappe (3) est formé, est pourvue d'un enduit (24), non adhésif aux fibres.

5. Courroie selon revendication 4,
**caractérisée par le fait que**
les deux côtés longitudinaux (S) de la courroie (5) sont également recouverts par l'enduit (24) non adhésif aux fibres.

6. Courroie selon revendication 4,
**caractérisée par le fait que**
les bords latéraux (S) de la courroie (5) sont pourvus d'un revêtement (26).

7. Courroie selon revendication 6,
**caractérisée par le fait que**
le revêtement est formé par un élément de recouvrement (26) s'étendant le long de la courroie, lequel pénètre au moins partiellement dans un évidement (30) des bords latéraux (S).

8. Courroie selon l'une des revendications 1 à 7,
**caractérisée par le fait que**
les bords latéraux (S) de la courroie (5) sont rectifiés et possèdent une profondeur de rugosité inférieure à 2,0 µm.

9. Courroie selon l'une des revendications 1 à 8,
**caractérisée par le fait que**
la face de la courroie (5), qui est à l'opposé de la surface sur laquelle le rouleau de nappe est formé, est pourvue d'une surface profilée (15).
